# EUROPÄISCHE PATENTSCHRIFT

(11) **EP 0 991 688 B1**
(45) Veröffentlichungstag und Bekanntmachung des Hinweises auf die Patenterteilung: **12.10.2005**
(21) Anmeldenummer: 98934971.7
(22) Anmeldetag: 18.06.1998
(51) Int. Cl.: C08G 59/18, C04B 41/48

(54) **ZWEIKOMPONENTEN-BESCHICHTUNGSMITTEL AUF EPOXIDHARZ-BASIS FÜR ZEMENTGEBUNDENE UNTERGRÜNDE**
TWO-COMPONENT COATING AGENT ON AN EPOXY RESIN BASE FOR CEMENT-BOUND BACKGROUNDS
AGENT D'ENDUCTION A DEUX CONSTITUANTS A BASE DE RESINE EPOXYDE POUR FONDS A BASE DE CIMENT

(30) Priorität: 20.06.1997 DE 19726263
(43) Veröffentlichungstag der Anmeldung: 12.04.2000
(73) Patentinhaber: Degussa Construction Chemicals (Schweiz) AG, 8048 Zürich (CH)
(72) Erfinder: TEMME, Werner, D-78244 Bietingen (DE); PRETZ, Thorsten, D-78343 Gaienhofen (DE); KRAUSCHE, Christian, D-78333 Stockach (DE)
(74) Vertreter: HOFFMANN EITLE
(86) Internationale Anmeldenummer: PCT/EP1998/003684
(87) Internationale Veröffentlichungsnummer: WO 1998/058981

(56) Entgegenhaltungen:
- EP-A- 0 709 418
- WO-A-98/17724
- US-A- 4 751 278
- CHEMICAL ABSTRACTS, vol. 86, no. 12, 21. März 1977 Columbus, Ohio, US; abstract no. 74640, FEDOROVA V. V. ET AL.: "Mastic for floors" XP002081079 & SU 529 197 A (INSTITUTE FOR INDUSTRIAL BUILDINGS AND CONSTRUCTION, USSR)
- DATABASE WPI Week 8751 Derwent Publications Ltd., London, GB; AN 87-358764 XP002081080 & JP 62 260820 A (TOA GOSEI CHEM IND) , 13. November 1987

## Beschreibung

### Technisches Gebiet

Gegenstand der vorliegenden Erfindung ist ein Zweikomponenten-Beschichtungsmittel auf Epoxidharz-Basis, das sich insbesondere für zementgebundene Untergründe eignet.

### Stand der Technik

In der Vergangenheit haben sich selbstverlaufende, gefüllte und/oder pigmentierte Beschichtungsmaterialien auf Epoxidharz-Basis für die Vergütung von zementgebundenen Untergründen, wie z.B. Industrieböden, Lager- und Verkehrsflächen, die stark begangen oder befahren werden, und Wandungen, die witterungsbedingten und/oder chemischen Einflüssen ausgesetzt sind, bestens bewährt. Insbesondere die mechanische und chemische Belastbarkeit kann mit derartigen Beschichtungen deutlich gesteigert werden.

Im Vordergrund steht dabei vornehmlich die Erhöhung der chemischen Resistenz gegen aggressive gasförmige oder flüssige Medien, aber auch die Verbesserung der rissüberbrückenden Eigenschaften, die vor allem Undichtigkeiten vorbeugen sollen, die durch Risse im Untergrund bedingt werden.

Besondere Anforderungen werden an die Epoxidharzbasierenden Beschichtungssysteme in speziellen Anwendungsbereichen gestellt, in denen Regelwerke wie z.B. die Bau- und Prüfgrundsätze (BPG) des Deutschen Instituts für Bautechnik zu beachten sind. So fordert dieses Regelwerk für Beschichtungssysteme, die in Lagern angewendet werden sollen, in denen wassergefährdende Flüssigkeiten vorgehalten werden, unter anderem eine statische Rissüberbrückungsfähigkeit von mindestens 0,2 mm bei gleichzeitig möglichst hoher Chemikalienbeständigkeit. Die Gesamtbeständigkeit der Beschichtungen wird mit speziellen Prüfflüssigkeiten über einen Zeitraum von 42 Tagen und unter einer Druckbeaufschlagung von 1 bar geprüft. Die genormten Prüfflüssigkeiten repräsentieren bestimmte Gruppen der möglichen Lagerchemikalien, wie z.B. anorganische Laugen oder Säuren, organische Säuren, Ester, Ketone, Alkohole oder aromatische Kohlenwasserstoffe.

Um den gestellten Anforderungen zu genügen, wurden verschiedene Epoxidharz-Beschichtungs-Systeme entwickelt, die alle aus mehreren Einzelschichten aufgebaut sind:
Das einfachste Beschichtungs-System besteht aus einer Grundierung und einer elastifizierten Deckschicht; dieses System weist aber eine nur sehr beschränkte Beständigkeit auf.

Es wurden daraufhin Systeme entwickelt, die zwischen der Grundierung und einer starren, hochvernetzten Deckschicht, die die Beständigkeit gewährleisten soll, eine Zwischenschicht besitzen. Diese kann zur Rissüberbrückung entweder elastisch sein oder aus einer Laminatschicht mit Gewebe- oder Vlieseinlagen bestehen.

Nur mit den mehrschichtigen Systemen ist es bislang möglich, die Rissüberbrückungsfähigkeit mit den von den Regelwerken geforderten Beständigkeiten gegenüber bestimmten Chemikalienprüfgruppen zu kombinieren, wobei die Qualität aber immer noch unbefriedigend ist. Zudem belasten der hohe Preis und der extreme Verlegeaufwand die Wirtschaftlichkeit dieser Systeme negativ.

Zum Einsatz kommen bisher meist Beschichtungssysteme auf Epoxidharz-Basis, die als Komponenten üblicherweise Epoxidharze mit einem Molgewicht < 700 g/mol wie Bisphenol A und/oder F, Reaktivverdünner und Polyamin-basierte Härterformulierungen enthalten. Die Härter können dabei bis zu einem gewissen Grad voraddiert sein und beinhalten Amine wie 3-Aminomethyl-3,5,5-trimethylcyclohexylamin (IPDA), Diaminodiphenylmethan (DDM), Bis-paraaminocyclohexylmethan (PACM), 1,3-Bis(aminomethyl)-cyclohexan (BAC) oder Triethylentetramin (TETA).

Mit Beschichtungsmitteln, die diese Amine einzeln oder im Gemisch enthalten, können bei gleichzeitiger Abdeckung einer hohen Anzahl von Prüfgruppen (inklusive Lösemittel) Risse < 0,2 mm überbrückt werden (Typ A), oder Risse ≥ 0,2 mm, wobei dann allerdings eine nur geringe Anzahl von Prüfgruppen (ohne Lösemittel) abgedeckt wird (Typ B). Im letzteren Fall werden den Beschichtungsmitteln zur Elastifizierung üblicherweise Extender (flüssige Füllstoffe) und/oder Harze bzw. Härter mit langkettigen Strukturen zugesetzt.

Insgesamt ist davon auszugehen, daß Beschichtungs-Systeme, die den Anforderungen der DIBT (Deutsches Institut für Bautechnik)-Prüfgruppen 3, 8, 10 bis 12 und 14 genügen, nur eine geringe Beständigkeit aufweisen; mittleren Ansprüchen genügt, wer die Prüfgruppen 1, 2 und 9 erfüllt, und hohen Ansprüchen, wer Anforderungen der Prüfgruppen 4 bis 7 und 13 gerecht wird.

Um das Anforderungsprofil der Beschichtungs-Systeme zu verbessern, wurden den Epoxidharz-Mischungen zusätzlich zu den genannten Komponenten auch Beschleuniger oder hochreaktive Amine zugemischt, vor allem das m-Xylylendiamin (MXDA). US 4,751,278 beschreibt beispielsweise Addukte aus Monoepoxiden und ausgewählten Aminen, insbesondere m-Xylylendiamin, die als Epoxidharz-Härter bei sehr tiefen Temparaturen zwischen - 4 und 10°C eingesetzt werden. Die besagten Addukte werden durch 2 - 4 stündiges Erhitzen der beiden Komponenten Monoepoxid und Diamin auf 60 bis 80°C hergestellt, wodurch eine vollständige Adduktion erreicht wird; nicht abreagierte bzw. freie Komponenten, insbesondere überschüssiges MXDA sind in den Addukten nicht vorhanden. Auch ist die Verwendung von MXDA als Härterkomponente im Gemisch mit tertiären Aminen bekannt;
in diesen relativ seltenen und nur auf Spezialanwendungen beschränkten Fällen erhielt man aber immer starre Beschichtungsmaterialien mit einem hohen Elastizitäts(E-)-Modul sowie zusätzlich starke Versprödungserscheinungen im ausgehärteten Beschichtungsmittel, so daß eine elastische Rissüberbrückung mit diesen MXDA-enthaltenden Härtergemischen nicht möglich war.

Aus den geschilderten Mängeln des Standes der Technik hat sich deshalb die Aufgabe gestellt, ein Zweikomponenten-Beschichtungsmittel auf Epoxidharz-Basis zu entwickeln, das ohne Versprödungserscheinungen eine elastische Rissüberbrückung gewährleistet und gleichzeitig eine sehr hohe Chemikalienbeständigkeit aufweist, wobei zur vereinfachten Verarbeitbarkeit auf laminäre Zwischenschichten verzichtet werden kann.

### Darstellung der Erfindung

Gelöst wurde diese Aufgabe mit einem Zweikomponenten-Beschichtungsmittel auf Epoxidharz-Basis mit einer Harzkomponente A und einer Härtekomponente B, das dadurch gekennzeichnet ist, dass die Harzkomponente A aus 15 bis 80 Gew.-%, bezogen auf die Komponente A, eines Epoxidharzes und wenigstens einem weiteren Bestandteil, ausgewählt aus einem Reaktivverdünner, einem festen Füllstoff, sonstigen Zusätzen wie Pigmenten, Additiven und flüssigen Füllstoffen, besteht und die Härtekomponente B aus 20 bis 50 Gew.-%, bezogen auf die Komponente B, m-Xylyendiamin und wenigstens einem weiteren Bestandteil, ausgewählt aus einem Adduktierharz, bei dem es sich um ein Vorreaktionsprodukt eines Epoxidharzes und eines Härters handelt, einem flüssigen Füllstoff sowie einem Beschleuniger, besteht, und dass die Komponenten A und B im Molverhältnis 1 : 0,8 bis 1,2 vorliegen.

Völlig überraschend wurde gefunden, daß bei Einhaltung der obigen Mengenverhältnisse und bei ausschließlicher Verwendung von m-Xylylendiamin als Härterkomponente bzw. bei einem hohen Überschuß von MXDA, bezogen auf den Gesamt-Amingehalt im Härter, die rissüberbrückenden Eigenschaften bestens mit einer äußerst hohen Chemikalienbeständigkeit kombiniert werden können. Darüberhinaus zeigte sich aber auch, daß mit den erfindungsgemäßen Beschichtungen Schichtdicken von mehreren Zentimetern dauerhaft aufgebaut werden können, die ohne den aufwendigen Einbau von Schwimm- oder Laminatschichten möglich werden, was in diesem Ausmaß nicht zu erwarten war.

### Bester Weg zur Ausführung der Erfindung

Für die Effekte, die die vorliegende Erfindung erreichen will, hat es sich als günstig erwiesen, wenn für die Harzkomponente A bevorzugt Epoxidharze vom Typ Bisphenol A und/oder F verwendet werden. Die Epoxidharzmenge kann 15 bis 80 Gew.-% betragen, vorzugsweise 20 bis 60 Gew.-%.

Wie bereits erwähnt, können neben den erfindungswesentlichen Hauptbestandteilen Epoxidharz und m-Xylylendiamin in beiden Komponenten A und B des erfindungsgemäßen Beschichtungsmittels noch weitere Bestandteile in wechselnden Anteilen vorhanden sein.

So hat es sich für bestimmte Anwendungsfälle als günstig erwiesen, wenn den Beschichtungsmitteln Reaktivverdünner zugegeben werden, wodurch insbesondere in der Komponente A die Viskosität einstellbar und die Gesamt-Chemikalienbeständigkeit des Beschichtungsmittels regelbar ist. Die Verwendung von Reaktivverdünnern für die Bereitung der Komponente B beeinflußt die Viskosität der gesamten Härterkomponente positiv. Typische Reaktivverdünner gemäß Erfindung sind epoxidgruppenhaltige mono-, di- oder polyfunktionelle Ether, vorzugsweise vom Typ Hexandiol-, Neopentyldiglykol- und Trimethylolpropan-Triglycidylether. Es kommen aber auch andere Vertreter in Frage, bspw. Kresylglycidylether, n-Dodecyl- oder n-Tetradecylglycidylether, Polypropylenglycol-Diglycidylether, 1,4-Butandiol-Diglycidylether oder Cyclohexandimethanol-Diglycidylether. Wenn in Komponente A ein Reaktivverdünner enthalten ist, beträgt seine Menge vorzugsweise bis 30 Gew.-%, z.B. 3 bis 20 Gew.-%.

Wie ebenfalls bereits erwähnt, können mit dem vorliegenden Beschichtungsmittel große Schichtdicken erzielt werden. Um diese möglichst wirtschaftlich realisieren zu können, sieht die vorliegende Erfindung vor, die Komponente A mit Füllstoffen anzureichern, die bevorzugt aus der Reihe Bariumsulfat, Quarzmehl, Quarzsand und Siliciumcarbid stammen oder sonstige nichtreaktive, geeignete Stoffe sein können. Selbstverständlich können diese auch in allen möglichen Mischungen untereinander zur Volumenvergrößerung eingesetzt werden. Wenn Füllstoffe verwendet werden, werden sie in Komponente A vorzugsweise in einer Menge von bis zu 70 Gew.-%, besonders bevorzugt von 50 bis 70 Gew.-% eingesetzt.

Die Erfindung sieht des weiteren vor, daß die Harzkomponente A sonstige Zusätze wie Pigmente, Additive und Extender enthalten kann, die die Einsatzmöglichkeiten des Beschichtungsmittels weiter vergrößern. Im Gegensatz zu den Füllstoffen, die gemäß Definition als Feststoffe eingesetzt werden, handelt es sich bei den sogenannten Extendern um flüssige Füllstoffe, z.B. in Form eines Alkohols wie Benzylalkohol, oder um Hilfsmittel, die die Filmbildung unterstützen. Als Zusätze werden aber auch Kohlenstoff-Fasern oder -Gewebe angesehen, die den Beschichtungsmitteln als sogenannte Ableiter zugegeben werden müssen, wenn beispielsweise brennbare Flüssigkeiten der Gefahrenklasse A1, A2 und B gelagert werden. Die Gesamtenge an Zusätzen dieser Art beträgt vorzugsweise bis 20 Gew.-%, z.B. 12 bis 18 Gew.-% soweit solche Zusätze verwendet werden.

Entscheidend für die besonderen und qualitativ hochstehenden Eigenschaften des Beschichtungsmittels gemäß Erfindung ist die unabdingbare Anwesenheit von m-Xylylendiamin als Härter, von dem die Komponente B bis zu 50 Gew.-%, vorzugsweise 20 bis 40 Gew.-% enthält.

Wie die Komponente A kann auch die Komponente B laut vorliegender Erfindung weitere Nebenbestandteile enthalten. Hier sind vorzugsweise Adduktierharze zu nennen, wofür epoxidhaltige Verbindungen besonders geeignet sind, die ebenso wie die Reakivverdünner eine gewisse Vorreaktion gestatten. Insbesondere Bisphenol A und/oder F haben sich als günstig erwiesen, aber eben auch die bekannten Reaktivverdünner können hierfür herangezogen werden. Bezüglich dieser Vorreaktion können die Aminverbindungen in der Komponente B erfindungsgemäß einen Adduktiergrad von maximal 35 % aufweisen. Der Adduktiergrad ist ein Maß für die Vorreaktion zwischen Epoxidharz und Härter. Die Verwendung von Adduktierharzen in einer Menge von bis zu 40 Gew.-%, z.B. 10 bis 40 Gew.-%, ist bevorzugt.

Die Komponente B kann aber auch flüssige Füllstoffe in Form von Extendern enthalten, wofür sich -wie auch in Komponente A- Benzylalkohol besonders eignet; in Frage kommen für die Komponenten A und B aber auch Xylol-Formaldehyd-Kondensationsprodukte und Cumaron-Inden-Harze allgemein sowie Diisopropylnaphthalin. Wenn solche Extender verwendet werden, liegen sie vorzugsweise in einer Menge von 20 bis 50 Gew.-%, besonders bevorzugt 30 bis 45 Gew.-% vor.

Zur möglichst raschen Ausbildung der gewünschten Eigenschaften kann der Komponente B außerdem ein Beschleuniger zugesetzt werden, vorzugsweise in Form tertiärer Amine; insbesondere das 2,4,6-Trimethylaminomethylphenol hat sich für diesen Zweck als geeignet erwiesen. Mit Hilfe der tertiären Amine sind die mechanischen Eigenschaften und die Reaktivität der Gesamtmasse in weiten Grenzen einstellbar, ohne daß damit die hervorragenden Eigenschaften des Beschichtungsmittels hinsichtlich Rissüberbrückung und Beständigkeit eingeschränkt werden. Selbstverständlich ist die Zugabemenge vom jeweils zugesetzten tertiären Amin abhängig, gemäß Erfindung sollte sie 10 Gew.-% allerdings nicht überschreiten. Brauchbare Ergebnisse werden z.B. mit Beschleunigermengen von 2 bis 6 Gew.-% erzielt.

Neben den tertiären Aminen und dem obligaten MXDA kann die Komponente B auch noch bis zu 50 Gew.-%, vorzugsweise bis zu 30 Gew.-% und besonders bevorzugt bis zu 15 Gew.-%, bezogen auf den Gesamt-Amingehalt, an weiteren Aminen enthalten. Die Erfindung berücksichtigt hierbei vorzugsweise das 3-Aminomethyl-3,5,5-trimethylcyclohexylamin, das 1,3-Bis(aminomethyl)cyclohexan, 2,5- oder 2,6-Bis(aminomethyl)bicyclo(2.2.1)heptan und 1,2-Diaminocyclohexan sowie das Bis-paraaminocyclohexylmethan, Triethylentetramin und Diaminodiphenylmethan oder Mischungen daraus.

Im Alltagsgebrauch der erfindungsgemäßen Beschichtungsmittel hat sich die Verwendung der je nach Anwendungsfall unterschiedlich zusammengesetzten Komponenten A und B im Molverhältnis von 1 : 1 als besonders günstig erwiesen.

Dabei können dem eigentlichen Beschichtungsmittel-Gemisch bestehend aus den Komponenten A und B auch noch mineralische Zuschläge mit einer Korngröße bis zu 3,0 mm zugesetzt werden, wobei deren Menge durchaus das bis zu 15-fache der Gesamtsumme aus den Komponenten A + B ausmachen kann.

Insbesondere vorgetrockneter Quarzsand, aber auch alle anderen körnigen und nichtreaktiven sand- und kiesförmigen Zuschläge kommen in Frage, um die innere Oberfläche des Beschichtungsmittels zu vergrößern und die "Verzahnung" des Beschichtungsmittels mit dem Untergrund zu verbessern.

Aufgrund der hervorragenden Produkteigenschaften sieht die vorliegende Erfindung eine Verwendung des beanspruchten Beschichtungsmittels insbesondere zur Oberflächenvergütung von Gußasphalten sowie von mechanisch und/oder stark chemisch belastbaren Untergründen auf Zementbasis vor. Erfindungsgemäß kann die jeweilige Schichtdicke bis zu 50 mm betragen, doch sind Dicken zwischen 2 und 4 mm zu bevorzugen.

Auch sind die vorliegenden Beschichtungsmittel auf Epoxidharz-Basis für einen Systemaufbau gemäß § 19 g des deutschen Wasserhaushalts-Gesetzes geeignet, vor allem als Systembestandteil entsprechend den Anforderungen der LAU (Lagern-Abfüllen-Umschlagen)- und HBV (Herstellen-Behandeln-Verwenden)-Bereiche.

Mit den Beschichtungsmitteln gemäß Erfindung können Risse mit Breiten bis zu 2 mm ohne Probleme dauerhaft und elastisch überbrückt werden, da die gewünschte statische Rissüberbrückungsfähigkeit durch die Wahl der geeigneten Schichtdicke oder durch das Zumischen zusätzlicher grobkörniger Zuschläge variabel einstellbar ist. Aber auch die Überbrückung breiterer Risse ist durch die große Variabilität des erfindungsgemäßen Beschichtungsmittels möglich.

Die nachfolgenden Beispiele veranschaulichen vergleichend die Vorteile der erfindungsgemäßen Beschichtungsmittel:

### Beispiele:

Für die nachfolgenden Beispiele wurden Beschichtungsmittel gewählt, deren Komponente A folgende Standardzusammensetzung aufwies:

| Komponente A: | Gew.-% |
|---|---|
| Flüssigepoxidharz (Bisphenol A) | 30,0 |
| Reaktivverdünner (Neopentylglycol-Diglycidylether) | 3,0 |
| Fester Füllstoff (Bariumsulfat, Quarzmehl) | 55,0 |
| Pigment (Eisenoxid, Titandioxid) | 5,0 |
| Additiv (Entlüfter und Entschäumer auf Polyacrylat-Basis) | 1,0 |
| Flüssiger Füllstoff (Benzylalkohol) | 6,0 |

Komponente B enthielt die in der nachfolgenden Tabelle jeweils angegebenen Bestandteile. Die Komponenten A und B wurden jeweils im Molverhältnis von 1 : 1 bei Temperaturen von 20°C mit Hilfe üblicher Mischvorrichtungen wie Dissolver und Laborrührwerk homogen vermischt und das Beschichtungsmittel entsprechend den Bau- und Prüfgrundsätzen des Deutschen Instituts für Bautechnik ("Regelwerk") u. a. auf die Parameter statische Rissüberbrückung und Chemikalienbeständigkeit geprüft.

Die Beispiele 1 bis 6 sind Vergleichsbeispiele; die Beispiele 7 bis 9 mit MXDA als alleiniger Amin(Härter)-Komponente sind Beispiele gemäß Erfindung.

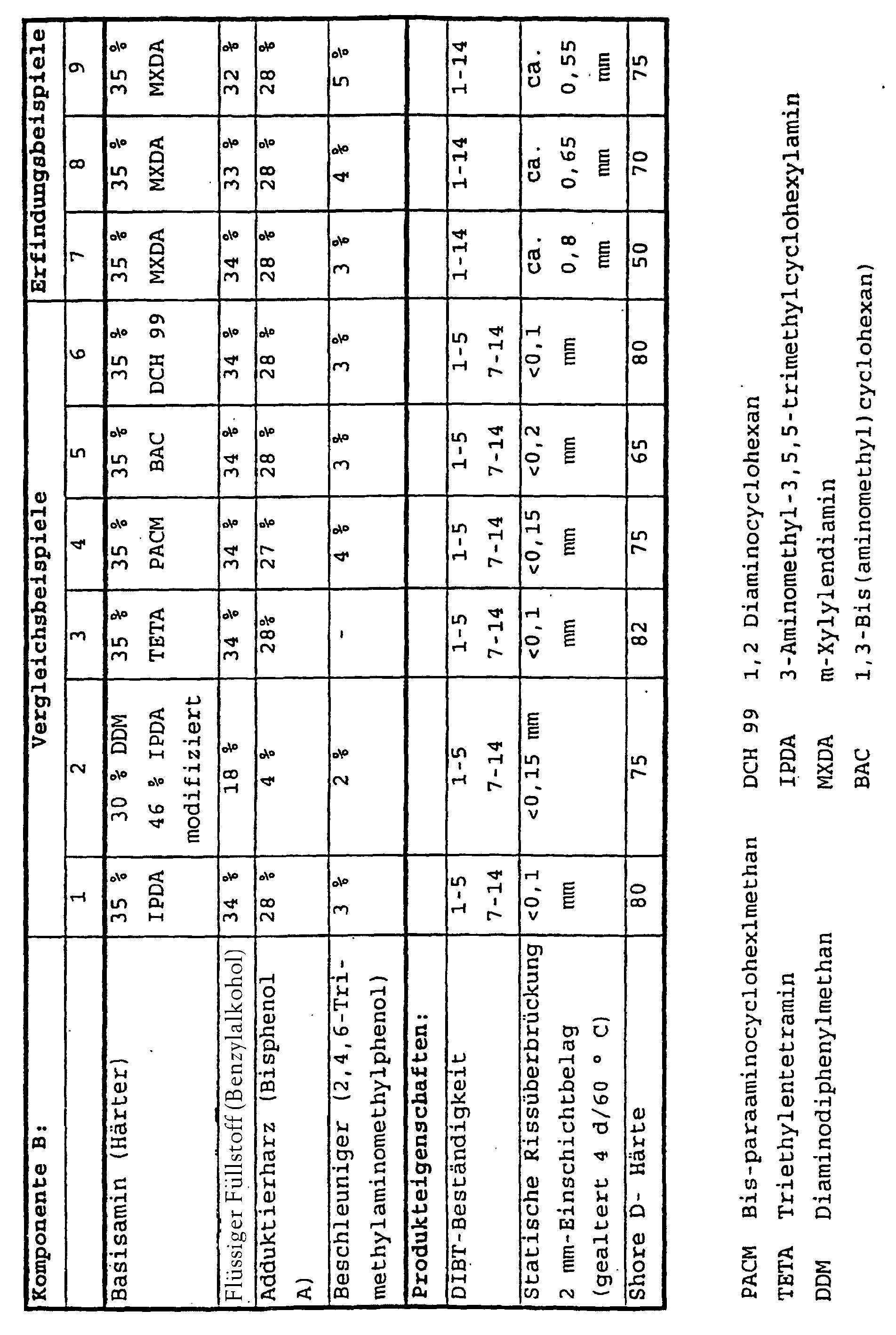

## Patentansprüche

1. Zweikomponenten-Beschichtungsmittel auf Epoxidharz-Basis mit einer Harzkomponente A und einer Härtekomponente B, das **dadurch gekennzeichnet ist, dass** die Harzkomponente A aus 15 bis 80 Gew.-%, bezogen auf die Komponente A, eines Epoxidharzes und wenigstens einem weiteren Bestandteil, ausgewählt aus einem Reaktivverdünner, einem festen Füllstoff, sonstigen Zusätzen wie Pigmenten, Additiven und flüssigen Füllstoffen, besteht und die Härtekomponente B aus 20 bis 50 Gew.-%, bezogen auf die Komponente B, m-Xylyendiamin und wenigstens einem weiteren Bestandteil, ausgewählt aus einem Adduktierharz, bei dem es sich um ein Vorreaktionsprodukt eines Epoxidharzes und eines Härters handelt, einem flüssigen Füllstoff sowie einem Beschleuniger, besteht, und dass die Komponenten A und B im Molverhältnis 1 : 0,8 bis 1,2 vorliegen.

2. Beschichtungsmittel nach Anspruch 1, **dadurch gekennzeichnet, daß** es in Komponente A ein Epoxidharz vom Typ Bisphenol A und/oder F enthält.

3. Beschichtungsmittel nach den Ansprüchen 1 und 2,
**dadurch gekennzeichnet, daß** der Reaktivverdünner der Komponente A ein epoxidgruppenhaltiger mono-, di- und/oder polyfunktioneller Ether, vorzugsweise vom Typ Hexandiol-, Neopentyldiglykol- und Trimethylolpropan-Triglycidylether ist und in einer Menge von bis 30 Gew.-% vorliegt.

4. Beschichtungsmittel nach den Ansprüchen 1 bis 3,
**dadurch gekennzeichnet, daß** es in der Komponente A als Füllstoff einen aus der Reihe Bariumsulfat, Quarzmehl, Quarzsand, Siliciumcarbid oder Mischungen daraus enthält und in einer Menge von bis 70 Gew.-% vorliegt.

5. Beschichtungsmittel nach den Ansprüchen 1 bis 4,
**dadurch gekennzeichnet, daß** die Komponente B 25 bis 40 Gew.-% m-Xylylendiamin enthält.

6. Beschichtungsmittel nach den Ansprüchen 1 bis 5,
**dadurch gekennzeichnet, daß** zur Herstellung der Komponente B in einer Menge von bis 40 Gew.-% ein Adduktierharz in Form einer epoxidhaltigen Verbindung, insbesondere Bisphenol A und/oder F, oder ein Reaktivverdünner verwendet wurde.

7. Beschichtungsmittel nach den Ansprüchen 1 bis 6,
**dadurch gekennzeichnet, daß** der Extender der Komponente A und/oder B einer aus der Reihe Benzylalkohol, Xylol-Formaldehyd-Kondensationsprodukte, Cumaron-Inden-Harze und Diisopropylnaphthalin ist.

8. Beschichtungsmittel nach den Ansprüchen 1 bis 7,
**dadurch gekennzeichnet, daß** die Komponente B als Beschleuniger tertiäre Amine in einer Menge von bis 10 Gew.-%, insbesondere 2,4,6-Trimethylaminomethylphenol enthält.

9. Beschichtungsmittel nach den Ansprüchen 1 bis 8,
**dadurch gekennzeichnet, daß** die Komponente B als weitere Aminkomponente bis zu 50 Gew.-% bezogen auf den Gesamt-Amingehalt eines Amins aus der Reihe Bis-paraaminocyclohexylmethan, 3-Aminomethyl-3,5,5-trimethylcyclohexylamin, Triethylentetramin, Diaminodiphenylmethan, 1,3-Bis(aminomethyl)cyclohexan, 2,5- oder 2,6-Bis(aminomethyl)bicyclo(2.2.1)heptan und 1,2-Diaminocyclohexan oder Mischungen daraus enthält.

10. Beschichtungsmittel nach den Ansprüchen 1 bis 9,
**dadurch gekennzeichnet, daß** es die Komponenten A und B im Molverhältnis 1 : 1 enthält.

11. Beschichtungsmittel nach den Ansprüchen 1 bis 10,
**dadurch gekennzeichnet, daß** es bis zum 15-fachen der Gewichtssumme der Komponenten A und B an mineralischen Zuschlägen mit einer Korngröße bis 3,0 mm, insbesondere vorgetrockneten Quarzsand, enthält.

12. Verwendung des Beschichtungsmittels nach den Ansprüchen 1 bis 11 zur Oberflächenvergütung von Gußasphalten sowie von mechanisch und/oder stark chemisch belastbaren Untergründen auf Zementbasis.

13. Verwendung des Beschichtungsmittels nach Anspruch 12 in Schichtdicken bis zu 50 mm, insbesondere 2 bis 4 mm, zur Beschichtung von zementgebundenen Untergründen.

14. Verwendung eines Beschichtungsmittels nach den Ansprüchen 1 bis 11 zur elastischen Überbrückung von Rissen.

## Claims

1. Two-component coating agent based on epoxy resin having a resin component A and a curing component B, which is **characterised in that** the resin component A consists of 15 to 80 wt.%, based on component A, of an epoxy resin and at least one further constituent selected from a reactive diluent, a solid filler, other additives, such as pigments, additives and liquid fillers, and the curing component B consists of 20 to 50 wt.%, based on component B, of m-xylylene diamine and at least one further constituent selected from a adducting resin, which is a pre-reaction product of an epoxy resin and a curing agent, a liquid filler and an accelerator, and **in that** components A and B are present in the molar ratio 1 : 0.8 to 1.2.

2. Coating agent according to claim 1, **characterised in that** it contains in component A, an epoxy resin of the type bisphenol A and/or F.

3. Coating agent according to claims 1 and 2, **characterised in that** the reactive diluent of component A is an epoxy group-containing monofunctional, difunctional and/or polyfunctional ether, preferably of the type hexane diol, neopentyl diglycol and trimethylol propane triglycidyl ether and is present in a quantity of up to 30 wt.%.

4. Coating agent according to claims 1 to 3, **characterised in that** it contains in component A as filler, one of the series barium sulphate, quartz powder, quartz sand, silicon carbide or mixtures thereof and is present in a quantity of up to 70 wt.%.

5. Coating agent according to claims 1 to 4, **characterised in that** component B contains 25 to 40 wt.% of m-xylylene diamine.

6. Coating agent according to claims 1 to 5, **characterised in that** to produce component B in a quantity of up to 40 wt.%, an adducting resin in the form of an epoxy-containing compound, in particular bisphenol A and/or F, or a reactive diluent was used.

7. Coating agent according to claims 1 to 6, **characterised in that** the extender of component A and/or B is one of a series benzyl alcohol, xylol-formaldehyde condensation products, coumarone-indene resins and diisopropyl naphthalene.

8. Coating agent according to claims 1 to 7, **characterised in that** component B contains as accelerator tertiary amines in a quantity of up to 10 wt.%, in particular 2,4,6-trimethylaminomethyl phenol.

9. Coating agent according to claims 1 to 8, **characterised in that** component B contains as further amine component up to 50 wt.%, based on the total amine content, of an amine from the series bisparaaminocyclohexylmethane, 3-aminomethyl-3,5,5-trimethylcyclohexylamine, triethylene tetramine, diaminodiphenylmethane, 1,3-bis(aminomethyl)cyclohexane, 2,5-bis(aminomethyl)bicyclo(2.2.1)heptane or 2,6-bis(aminomethyl)bicyclo(2.2.1)heptane and 1,2-diaminocyclohexane or mixtures thereof.

10. Coating agent according to claims 1 to 9, **characterised in that** it contains the components A and B in the molar ratio 1 : 1.

11. Coating agent according to claims 1 to 10, **characterised in that** it contains up to 15 times the cumulative weight of components A and B of mineral additives having a grain size up to 3.0 mm, in particular pre-dried quartz sand.

12. Use of the coating agent according to claims 1 to 11 for surface hardening of asphalt mastics and of mechanically and/or strongly chemically loadable substrates based on cement.

13. Use of the coating agent according to claim 12 in layer thicknesses up to 50 mm, in particular 2 to 4 mm, for coating cement-bound substrates.

14. Use of a coating agent according to claims 1 to 11 for resilient bridging of cracks.

## Revendications

1. Agent d'enduction à deux composants, à base de résine époxyde, avec un composant de résine A et un composant durcisseur B, **caractérisé en ce que** le composant de résine A est composé de 15 à 80 % en poids; en se référant au composant A, d'une résine époxyde et d'au moins un autre composant sélectionné parmi un dilueur réactif, une charge solide, d'autres additifs, tels que des pigments, des additifs et des charges liquides, et le composant B est composé de 20 à 50 % en poids, en se référant au composant B, de m-xylyène diamine et d'au moins un autre composant sélectionné, parmi une résine d'adduction, pour laquelle il s'agit d'un produit de préréaction d'une résine époxyde et d'un durcisseur, une charge liquide, ainsi qu'un accélérateur, et **en ce que** les composants A et B se présentent dans un rapport molaire 1 : 0,8 à 1,2.

2. Agent d'enduction selon la revendication 1, **caractérisé en ce qu'**il contient dans le composant A une résine époxyde de type bisphénol A et/ou F.

3. Agent d'enduction selon les revendications 1 et 2, **caractérisé en ce que** le diluant réactif du composant A est un éther mono-, di- et/ou polyfonctionnel, contenant des groupes époxyde, de préférence, de type hexandiol-, néopentyldiglykol- et triméthylolpropan-triglycidyléther et se présente en une quantité allant jusqu'à 30 % en poids.

4. Agent d'enduction selon l'une des revendications 1 à 3, **caractérisé en ce qu'**il contient, dans le composant A, en tant que charge, un produit de la série sulfate de baryum, farine de quartz, sable de quartz, carbure de silicium ou des mélanges formés de ceux-ci, et se présente en une quantité allant jusqu'à 70 % en poids.

5. Agent d'enduction selon l'une des revendications 1 à 4, **caractérisé en ce que** le composant B contient de 25 a 40 % en poids de m-xylylènediamine.

6. Agent d'enduction selon les revendications 1 à 5, **caractérisé en ce que**, pour fabriquer le composant B en une quantité allant jusqu'à 40 % en poids, on utilise une résine d'adduction, se présentant sous la forme d'une combinaison contenant un époxy, en particulier du bisphénol A et/ou F, ou bien un diluant réactif.

7. Agent d'enduction selon les revendications 1 à 6, **caractérisé en ce que** l'extenseur du composant A et/ou B est l'un d'une série comprenant un alcool benzylique, des produits de condensation xylol-formaldéhyde, des résines cumaron-indène et diisopropylnaphtaline.

8. Agent d'enduction selon les revendications 1 à 7, **caractérisé en ce que** le composant B contient, en tant qu'accélérateur, une amine tertiaire, en une quantité allant jusqu'à 10 % en poids, en particulier du 2,4,6-triméthylaminométhylphénol.

9. Agent d'enduction selon les revendications 1 à 8, **caractérisé en ce que** le composant B contient, en tant qu'autre composant amine, jusqu'à 50 % en poids, en se référant à la teneur globale en amine d'une amine, de la série bisparaaminocyclohexylméthane, 3-aminométhyl-3,5,5-triméthylcyclohexylamine, triéthylènetétramine; diaminodiphénylméthane, 1,3-bis(aminométhyl)cyclohexane, 2,5- ou 2,6 bis (aminométhyl)bicyclo(2.2.1)heptane et 1,2-diaminocyclohexane ou leurs mélanges.

10. Agent d'enduction selon les revendications 1 à 9, **caractérisé en ce qu'**il contient les composants A et B en un rapport molaire 1 : 1.

11. Agent d'enduction selon les revendications 1 à 10, **caractérisé en ce qu'**il contient jusqu'à 15 fois la somme en poids des composants A et B en additifs minéraux, avec une taille de grain allant jusqu'à 3,0 millimètres, en particulier du sable de quartz préséché.

12. Utilisation de l'agent d'enduction selon les revendications 1 à 11, pour l'amélioration de la surface d'asphaltes coulées, ainsi que sous-sols ou fonds, susceptible d'être sollicités mécaniquement et/ou fortement chimiquement, à base de ciment.

13. Utilisation de l'agent d'enduction selon la revendication 12, en des épaisseurs de couche allant jusqu'à 50 millimètres, en particulier 2 à 4 millimètres, pour l'enduction de sous-sols ou fonds, lié par du ciment.

14. Utilisation d'un agent d'enduction selon les revendications 1 à 11, pour le pontage élastique de fissures.
